# EUROPÄISCHE PATENTSCHRIFT

(11) **EP 1 326 042 B1**
(45) Veröffentlichungstag und Bekanntmachung des Hinweises auf die Patenterteilung: **31.08.2005**
(21) Anmeldenummer: 02027791.9
(22) Anmeldetag: 12.12.2002
(51) Int. Cl.: F16L 25/00

(54) **Steckverbindung zwischen einem ringgewellten Schlauch und einem Glattrohr**
Plug connection between a corrugated hose and an unprofiled pipe
Connexion par fiche entre un tube ondulé et un tube lisse

(30) Priorität: 20.12.2001 DE 10162762
(43) Veröffentlichungstag der Anmeldung: 09.07.2003
(73) Patentinhaber: Witzenmann GmbH, 75175 Pforzheim (DE)
(72) Erfinder: Gehring, Matthias, 75334 Straubenhardt (DE); Foitzik, Peter, 75242 Schellbronn (DE)
(74) Vertreter: Blumenröhr, Dietrich

(56) Entgegenhaltungen:
- DE-A- 19 746 354
- DE-U- 29 905 709
- FR-A- 2 655 126

## Beschreibung

Die Erfindung betrifft eine Steckverbindung zwischen einem ringgewellten Schlauch und einem Glattrohr, wobei mit dem Schlauchende ein das Glattrohr umgebendes Halteelement zum Festhalten des Glattrohres wenigstens mittelbar verbunden und das Glattrohrende von wenigstens einem dem Haltelement in Richtung auf den Schlauch vorgelagerten Dichtungsring umfangen ist, der seinerseits wenigstens mittelbar dichtend mit dem Schlauch in Verbindung steht.

Eine solche Steckverbindung ergibt sich unter anderem aus Montage- oder Revisionsgründen, wenn von einem Medium durchströmte Bauteile bei ihrer Montage zunächst angeschlossen und dann an Ort und Stelle gebracht, beispielsweise geklappt werden, oder wenn solche Bauteile ausgewechselt bzw. zur Überprüfung oder Wartung aus ihrer Arbeitsposition genommen werden müssen. In allen Fällen muss das genannte Bauteil nach dem Herstellen der Strömungsverbindung noch bewegt werden, weshalb in der Strömungsverbindung der eingangs gewellte Wellschlauch als flexibles Element sitzt. Andererseits dient die Steckverbindung der leichten Herstellung der Strömungsverbindung durch einfaches Einstecken es beispielsweise bauteilseitigen Glattrohres in das mit dem Wellschlauch verbundene Halteelement so, dass ein dichter Strömungsweg hergestellt ist, ohne dass es dabei noch der Verwendung von Montagewerkzeugen etc. bedürfte.

Für Wellschlauch und Glattrohr sowie auch die weiteren, die Steckverbindung bildenden Teile finden als Material in der Regel Metall, insbesondere rostfreier Stahl oder Kupfer Verwendung. Je nach den Besonderheiten des Einzelfalles kann hier jedoch auch die Verwendung von Kunststoff gewünscht bzw. ausreichend oder angebracht sein.

Bei bekannten Steckverbindungen ist nun die Anordnung so getroffen, dass das Halteelement zusammen mit dem Dichtungsring in einem Grundkörper beispielsweise aus Messing sitzt, der mit seinem der Einstecköffnung für das Glattrohr abgewandte Ende mit Hilfe einer Überwurfmutter gegen das Schlauchende gespannt ist, wobei diese Schraubverbindung ebenfalls mit Hilfe geeigneter, bekannter Materialien der Abdichtung bedarf und dazu eine entsprechende, den Anschluss ermöglichende Ausbildung des Schlauchendes erforderlich macht. Diese zur Eröffnung der Möglichkeit der Steckverbindung gegebene Bauweise ist ersichtlich von Zahl und Umfang der verwendeten Bauteile sowie der zusätzlichen Fertigungsmaßnahmen platz- und kostengreifend, so dass sie bei einem ringgewellten Schlauch als flexibles Verbindungselement einen erheblichen Teil der Gestehungskosten ausmacht.

Dokument DE-A-19746354 offenbart eine Steckverbindung zwischen einem ringgewellten Schlauch und einem Glattrohr, wobei zwei im Schlauchende angeordnete Dichtungsringe am Glattrohr dichtend anliegen.

Aufgabe der Erfindung ist es daher, eine Steckverbindung der eingangs genannten Art dahingehend anders zu gestalten, dass die Zahl der erforderlichen Bauteile und Dichtstellen sowie des dafür erforderlichen Platzes erheblich reduziert, die jeweilige Steckverbindung also deutlich vereinfacht ist, so dass sich eine spürbare Herabsetzung des Gestehungskosten für einen mit Anschlüssen für eine Steckverbindung versehenen Wellschlauch ergibt.

Diese Aufgabe ist erfindungsgemäß dadurch gelöst, dass das Halteelement im Schlauchende angeordnet und von diesem wenigstens mittelbar durch gegenseitigen formschlüssigen Eingriff in Axialrichtung gehalten ist, und dass dem Halteelement jenseits der Dichtung eine Führungshülse mit einem dem Außendurchmesser des Glattrohes entsprechenden Innendurchmesser vorgelagert ist, die durch den Schlauch radial praktisch spielfrei und wenigstens mittelbar durch gegenseitigen formschlüssigen Eingriff in Axialrichtung gehalten ist.

Diese erfindungsgemäßen Maßnahmen haben die Wirkung, dass nunmehr der vorstehend so bezeichnete, gehäuseförmige Grundkörper entfallen kann einschließlich der zu seiner Befestigung am Schlauchende erforderlichen Überwurfmutter, sonstiger baulicher Maßnahmen sowie der damit zusammenhängenden zusätzlichen Abdichtungsmittel. Vielmehr kann das Halteelement, für dessen Aufnahme bisher der Grundkörper erforderlich war, unmittelbar im Schlauchende angeordnet und dort in der erforderlichen Weise fixiert werden, so dass nunmehr das Glattrohrende unmittelbar an das so gestaltete Schlauchende eingesteckt werden kann. Dabei dient die mit Abstand vom Halteelement im Wellschlauch angebrachte Führungshülse dazu, ein Kippen des Glattrohrendes innerhalb der Steckverbindung zu vermeiden, durch die die Funktionsweise der dem Halteelement vorgelagerten Dichtung beeinträchtigt werden könnte.

Mit der Erfindung ergibt sich durch den erwähnten Fortfall von Bauteilen und deren unmittelbaren Ersatz durch das Material des Schlauchendes selbst eine so erhebliche Einsparung, dass sich die Gestehungskosten für die Erstellung der Steckverbindung auf einen Bruchteil der bisherigen Gestehungskosten reduzieren, ohne dass dafür ein besonders ins Gewicht fallender Aufwand erforderlich wäre. Insbesondere ist aber durch die erfindungsgemäße Steckverbindung auch die Sicherheit bezüglich Dichtheit der Verbindung erhöht, denn diese wird nunmehr nur noch an einer Stelle und allein von dem Dichtungsring gewährleistet im Gegensatz zu der bisher zumindest an zwei Stellen erforderlichen Herstellung einer dichten Verbindung.

Aus Gründen eine Montageerleichterung und später noch anzusprechenden noch weiteren Gründen hat es sich als zweckmäßig erwiesen, dass der Halteelement und Führungshülse aufnehmende Endabschnitt des Schlauches in Richtung auf eine Abflachung der Schlauchwellen gestreckt ist, also gegenüber dem übrigen Wellschlauch eine verhältnismäßig flache Wellung aufweist. Ist nunmehr der Dichtungsring nach einem weiteren Merkmal der Erfindung in eine zwischen Halteelement und Führungshülse gelegene Welle des Schlauches von innen eingesetzt, so ergibt sich in besonders spürbarer Weise eine Erhöhung der vom Dichtungsring ausgeübten Dichtkraft bei der normalerweise auftretenden Innendruckbelastung der in Rede stehenden Baueinheit, unter der sich ein Wellschlauch axial zu strecken sucht, was bezüglich des Dichtungsringes zu einer Radialbelastung in Richtung auf das Glattrohrende führt.

Sind bei einer zweckmäßigen Weiterbildung des Erfindungsgegenstandes wenigstens zwei Dichtungsringe in benachbarten Schlauchwellen angeordnet, können diese durch eine Brücke miteinander verbunden sein, die das zwischen den Schlauchwellen gelegene Wellental der Schlauchprofilierung außerhalb der Außenkontur des Glattrohres übergreift, womit für die Dichtungsringe eine insbesondere auch gegen Axialbewegungen des Glattrohrendes besonders stabile Baueinheit geschaffen ist. Ferner kann infolge der verhältnismäßig flachen Wellung des Schlauchendes vorgesehen sein, dass der Dichtungsring einen den gestreckten Schlauchwellen angepassten, linsenförmigen Axialquerschnitt aufweist.

Was das Haltelement betrifft, so kann dieses ausgehend von einem im wesentlichen im Schlauchende positionierten, endständigen, über den Umfang geschlossenen und gegebenefalls mit seinem Innendurchmesser dem Außendurchmesser des Glattrohrendes entsprechenden Tragring sich in den Schlauch parallel zu dessen Achse erstreckende und gleichmäßig über den Umfang angeordnete, in Grenzen federnd radial bewegliche und in Umfangsrichtung einen gegenseitigen Abstand aufweisende Haltefinger aufweisen und es können die Haltefinger an ihren freien Enden eine nach radial innen gerichtete Abwinkelung zur reibschlüssigen Arretierung des Glattrohres aufweisen, wozu die Abwinkelungen sich bei entspanntem Zustand der Haltefinger entständig nach radial innen in den Bereich des Außenquerschnittes des Glattrohres erstrecken. Hiermit ergibt sich also, dass der von den Haltefingern im entspannten Zustand umfangene Innendurchmesser um ein im Sinne der Erzeugung ausreichende Haltekräfte vorherbestimmtes Maß kleiner als der Außendurchmesser des Glattrohres ist, wobei zur weiteren Verbesserung noch vorgesehen sein kann, dass an den Abwinkelungen endständig eine winkelige Kante zur wenigstens reibschlüssigen Anlage am Glattrohr ausgebildet ist, die insbesondere dann, wenn das Halteelement aus Metall besteht, sogar einen gewissen Formschluss durch radiales Eindringen in das Material des Glattrohrendes herstellen kann.

In weiterer Ausgestaltung des Erfindungsgegenstandes kann vorgesehen sein, dass die freien Enden der Haltefinger eine nach radial außen gerichtete und in eine zugeordnete Welle des Schlauches ragende Verdickung aufweisen, dass das Haltelement im Bereich des an den Tragring anschließenden Endes der Haltefinger einen außen gegebenenfalls unterbrochen umlaufenden und in eine zugeordnete Schlauchwelle ragenden Wulst aufweist, dessen Querschnitt in Richtung der Schlauchachse geringer als der entsprechende Querschnitt der Schlauchwelle ist, und dass der axiale Abstand zwischen den Verdickungen der Haltefinger und dem Wulst derart ausgebildet ist, dass das Halteelement axial verschiebbar ist zwischen einer Stellung, bei der die Verdickungen ohne Berührung mit einer axial benachbarten Flanke der zugeordneten Schlauchwelle sind, und einer Stellung, bei der die Verdickungen durch die in Richtung auf das Schlauchende axial benachbarte Flanke der zugeordneten Schlauchwelle in Richtung einer Schwenkung der Haltefinger nach radial innen belastet sind.

Durch diese Maßnahmen ist zum einen mit dem Wulst die formschlüssige Verbindung zwischen Schlauchende und Halteelement hergestellt. Zum anderen erlaubt die dem Halteelement belassende axiale Verschiebbarkeit in Verbindung mit den Verdickungen der Haltefinger eine Verstärkung der von diesen ausgeübten Haltekraft. Denn wenn das Glattrohrende zusammen mit dem reibschlüssig auf ihm sitzenden Haltelement unter der normalerweise herrschenden Innendruckbelastung des Wellschlauches sich in Richtung auf das Schlauchende aus dem Schlauch heraus zu verschieben trachtet, nimmt es das Halteelement über die reibschlüssige Verbindung mit den Abwinkelungen der Haltefinger mit, wodurch die Verdickungen der Haltefinger gegen die genannte Wellenflanke gedrückt werden. Das wiederum führt zu einer Belastung der Enden der Haltefinger nach radial innen und damit zu einer Erhöhung der Reibkraft zwischen Abwinkelungen der Haltefinger und dem Glattrohrende sowie zu einer Zentrierung und radialen Halterung des Glattrohrendes.

Auf der anderen Seite lässt sich das Halteelement leicht durch Einstecken in das Schlauchende montieren, wenn die radiale Ausdehnung des Wulstes einerseits sowie der Verdickungen der Haltefingerenden andererseits nicht zu groß gewählt wird. Denn dann kann das Halteelement unter dabei erfolgender Schwenkung der Haltefinger nach radial innen rastend in die beschriebene Position gesteckt werden, aus der es dann bei eingestecktem Glattrohrende nicht mehr herausgelangen kann, weil dann die durch das Einstecken des Glattrohrendes weiter nach radial außen geschwenkten Verdickungen der Haltefingerenden an der genannten Flanke des Schlauchendes hängen bleiben.

In Weiterbildung des Erfindungsgegenstandes kann ferner vorgesehen sein, dass der Tragring das Schlauchende nach außen überragt und dort endständig einen sich nach radial außenerstreckenden, vom Schlauchende stets axial beabstandeten Bund aufweist. Dieser Bund bildet dann eine Handhabe zum leichteren Erfassen des Halteelementes, um es für eine Demontage des Glattrohrendes soweit in das Schlauchende hineinschieben zu können, dass die Verdickung der Haltefingerenden von der genannten Wellenflanke freikommen und somit das Glattrohrende aus dem Haltelement herausgezogen werden kann.

Nach einer anderen Ausbildung des Erfindungsgegenstandes kann vorgesehen sein, dass das Halteelement durch einen in eine Welle des Schlauchendes eingesetzten Federring gebildet ist, dass der Federring ausgehend von einem Ringkörper gleichmäßig über den Umfang verteilte und sich vom Schlauchende in Richtung auf den Schlauch schräg nach radial innen erstreckende Federzungen aufweist, dass der von den freien Enden der Federzungen umschriebene Querschnitt geringer als der Außenquerschnitt des Glattrohrendes ist, und dass der Außendurchmesser des Federringes bzw. dessen Ringkörpers geringer als der Außendurchmesser der zugeordneten Schlauchwelle aber größer als der freie Innenquerschnitt des Schlauches ist. Mit dieser Bauform ist folglich dem Halteelement eine besonders einfache und vor allem in Axialrichtung platzsparende Gestaltung gegeben, wobei ein ungewolltes Lösen der Steckverbindung dadurch verhindert wird, dass sich die Federzungen im Außenmantel des Glattrohrendes verkrallen und damit gleichzeitig das Glattrohrende zentriert und radial gehalten bzw. abgestützt wird.

Um den Federring montieren zu können, weist er eine über seinen gesamten radialen Querschnitt gehende Trennfuge auf. Diese ermöglicht es, den Federring radial soweit zu verjüngen, dass er sich in das Schlauchende einführen und in die gewünschte Schlauchwelle einsprengen lässt. Will sich nun das Glattrohrende unter dem normalerweise herrschenden Innendruck aus der Steckverbindung lösen und bewirkt damit die bereits erwähnte Verkrallung mit den Federzungen, so kann sich der Federring radial nur solange aufweiten, bis der Außenumfang seines Ringkörpers in der zugeordneten Schlauchwelle zur Anlage kommt.

Um eine so gestaltete Steckverbindung lösbar auszubilden, kann vorgesehen sein, dass dem Federring in Richtung auf die Öffnung des Schlauchendes vorgelagert in das Schlauchende eine Entriegelungshülse mit einem dem Außendurchmesser des Glattrohrendes entsprechenden Innendurchmesser eingesetzt ist, dass die Entriegelungshülse das Schlauchende nach außen mit ihrem einen Ende axial überragt, und dass durch das andere Ende der Entriegelungshülse bei deren entsprechender Axialverschiebung die Federzungen nach radial außen schwenkbar sind, somit außer Eingriff gegenüber dem Glattrohrende gelangen.

Um hier die Handhabung zu erleichtern, kann das eine Ende der Entriegelungshülse einen sich nach radial außen erstreckenden, vom Schlauchende axial beabstandeten Bund aufweisen.

Um auch die Entriegelungshülse unverlierbar im Schlauchende anzuordnen, ist es zweckmäßig, dass das eine Ende der Entriegelungshülse als über den Umfang geschlossener Ring mit einem dem Außendurchmesser des Glattrohrendes entsprechenden Innendurchmesser ausgebildet ist, dass die übrige Länge der Entriegelungshülse achsparallele, gleichmäßig über den Umfang verteilt angeordnete und zum anderen Ende der Entriegelungshülse hin offene Längsschlitze aufweist, dass die übrige Länge der Entriegelungshülse einen außen unterbrochen umlaufenden und in eine zugeordnete Schlauchwelle ragenden Wulst aufweist, dessen Querschnitt in Richtung der Schlauchachse geringer als der entsprechende Querschnitt der Schlauchwelle ist, und dass der Wulst an der Entriegelungshülse eine Axialposition hat, die die Axialverschiebung der Entriegelungshülse zum Verschwenken der Federzungen erlaubt.

Was zu beiden vorbeschriebenen Bauformen die Führungshülse betrifft, so kann diese an ihrem vom Schlauchende weiter entfernten Ende eine Verjüngung des Innenquerschnittes als Axialanschlag für das Glattrohrende und an ihrem anderen Ende einen nach radial außen vorstehenden Bund zum formschlüssigen Eingriff in eine zugeordnete Schlauchwelle aufweisen. Dabei kann hier die radiale Ausdehnung des Bundes so begrenzt sein, dass sich die Führungshülse unter geringer radialer Aufweitung des Wellschlauches in ihre Position bringen lässt, die dadurch bestimmt sein kann, dass das die Verjüngung des Innenquerschnittes aufweisende Ende der Führungshülse an den ungereckten weiteren Teil des Wellschlauches schlägt, der naturgemäß einen geringeren freien Innendurchmesser aufweist als der gereckte Teil des Schlauchendes. Eine andere Möglichkeit kann darin bestehen, dass die Führungshülse mit einem Längsschlitz von gewisser Breite ausgestaltet ist, so dass sie sich zur Montage radial etwas zusammendrücken lässt.

Schließlich kann bei den vorstehend beschriebenen Bauformen nach der Erfindung vorgesehen sein, dass außen auf den Schlauch eine axial den Abschnitt von Schlauchende bis einschließlich den von der Führungshülse eingenommenen Bereich übergreifende, hohlzylindrische Stützhülse aufgesetzt ist, deren Innendurchmesser dem Außendurchmesser des Schlauches entspricht und die durch endständige, schlauchwellenhintergreifende Abwinkelungen gegen Axialverschiebung gesichert ist. Damit trägt diese Stützhülse zur Stabilisierung der Steckverbindung bei, indem sie die axiale Flucht von Führungshülse, Dichtungsring und Halteelement zusätzlich aufrecht erhält.

Nach einer wieder anderen Ausbildung des der Erfindung zugrundeliegenden Lösungsprinzips kann vorgesehen sein, dass die Führungshülse eine bis zum Schlauchende reichende, im wesentlichen hohlzylindrische Verlängerung aufweist, dass zwischen dem so gebildeten Bauteil und Schlauch ein formschlüssiger Eingriff wenigstens gegen Axialverschiebung zum Schlauchende hin gegeben ist, dass das Bauteil auf seinem Außenmantel wenigstens einen mit einer zugeordneten Schlauchwelle in dichtendem Eingriff befindlichen Dichtring trägt, dass die Verlängerung wenigstens eine innere Ringkammer zur Aufnahme des Dichtungsringes für das Glattrohr aufweist und dass in der Verlängerung an ihrem der Führungshülse abgewandten Ende das Halteelement sitzt. Hier ist also die Anordnung so getroffen, dass die die Steckverbindung bildenden Bauelemente zu einer in sich geschlossenen Baueinheit zusammengefasst sind, die dann in das Schlauchende rastend eingesteckt werden kann, womit die Möglichkeit eröffnet ist, die Baueinheit außerhalb des Schlauches fertig vorzumontieren bzw. in dieser vormontierten Form ohne den zugehörenden Wellschlauch auf Lager zu halten.

Zweckmäßig ist es in diesem Zusammenhang, dass die Verlängerung im Außenquerschnitt größer als die Führungshülse ist und in einem im Querschnitt entsprechend aufgeweiteten Schlauchende sitzt.

Ferner kann bei dieser Bauform vorgesehen sein, dass der formschlüssige Eingriff zwischen Bauteil und Schlauch durch auf der Verlängerung über wenigstens einen Umfang gleichmäßig verteilt angeordnete und nach radial außen in eine zugeordnete Schlauchwelle ragende Rastnasen gegeben ist, und dass die Rastnasen auf dieser dem Schlauchende abgewandten Seite eine Schrägfläche aufweisen, die mit der Richtung der Schlauchachse einen flachen Winkel einschließt. Auf diese Weise ist an den Rastnasen eine Rampe gebildet, die das rastende Einstecken der genannten Baueinheit in das Schlauchende erleichtert.

Was hier die Ausbildung des Halteelementes betrifft, so kann vorgesehen sein, dass das Haltelement ausgehend von einem im wesentlichen im Bereich des freien Endes der Verlängerung positionierten, endständigen, über den Umfang geschlossenen und gegebenfalls mit seinem Innendurchmesser dem Außendurchmesser des Glattrohrendes entsprechenden Tragring sich in die Verlängerung parallel zur Schlauchachse erstreckende und gleichmäßig über den Umfang angeordnete, in Grenzen federnd radial bewegliche und in Umfangsrichtung einen gegenseitigen Abstand aufweisende Haltefinger aufweist, und dass die Haltefinger an ihren freien Enden nach radial innen gerichtete Abwinkelungen zur reibschlüssigen Arretierung des Glattrohres aufweisen, wozu die Abwinkelungen sich bei entspanntem Zustand der Haltefinger endständig nach radial innen in den Bereich des Außenquerschnittes des Glasrohres erstrecken. Diese Ausbildung des Halteelementes entspricht also im wesentlichen der des bei der erstgenannten Bauform verwendeten Halteelementes, womit die dazu gemachten Ausführungen hier entsprechend gelten.

Auch jetzt kann vorgesehen sein, dass an den Abwinkelungen endständig eine winklige Kante zur wenigstens reibschlüssigen Anlage am Glattrohr ausgebildet ist. Ferner kann auch hier im einzelnen vorgesehen sein, dass die freien Enden der Haltefinger eine nach radial außengerichtete und in eine radiale Erweiterung des freien Innenquerschnittes der Verlängerung ragende Verdickung aufweisen, dass der Außenquerschnitt jeder Verdickung über eine sich in Richtung auf den Tragring erstreckende, gegenüber der Achsrichtung des Schlauchendes einen flachen Winkel bildende Schrägfläche mit der Außenfläche des zugeordneten Haltefingers verbunden ist, und dass die Erweiterung eine mit den Schrägflächen korrespondierende Abschrägung aufweist.

Wenn bei dieser Bauform ebenfalls der Tragring das freie Ende der Verlängerung nach außen überragt und dort endständig einen sich nach radial außen erstreckenden, vom Ende der Verlängerung stets beabstandeten Bund aufweist, so ist auch damit eine Handhabe zur Erleichterung eines Lösens der in Rede stehenden Steckverbindung geschaffen.

Schließlich kann die mit der Verlängerung einstückig verbundene Führungshülse an ihrem vom freien Ende des Schlauches bzw. der Verlängerung weiter entfernten Ende eine Verjüngung des Innenquerschnittes als Axialanschlag für das Glattrohrende aufweisen.

Weitere Merkmale und Einzelheiten der Erfindung ergeben sich aus der nachfolgenden Beschreibung von Ausführungsformen, die auf der Zeichnung dargestellt sind. In der Zeichnung zeigen:
- Figur 1: ein Schlauchende mit einer ersten Ausführung einer Steckverbindung im axialen Schnitt;
- Figur 2: eine weitere Ausgestaltung des Gegenstandes gemäß Figur 1,
- Figur 3: eine zweite Ausführung einer Steckverbindung im Axialschnitt und
- Figur 4: eine dritte Ausführung einer Steckverbindung im Axialschnitt.

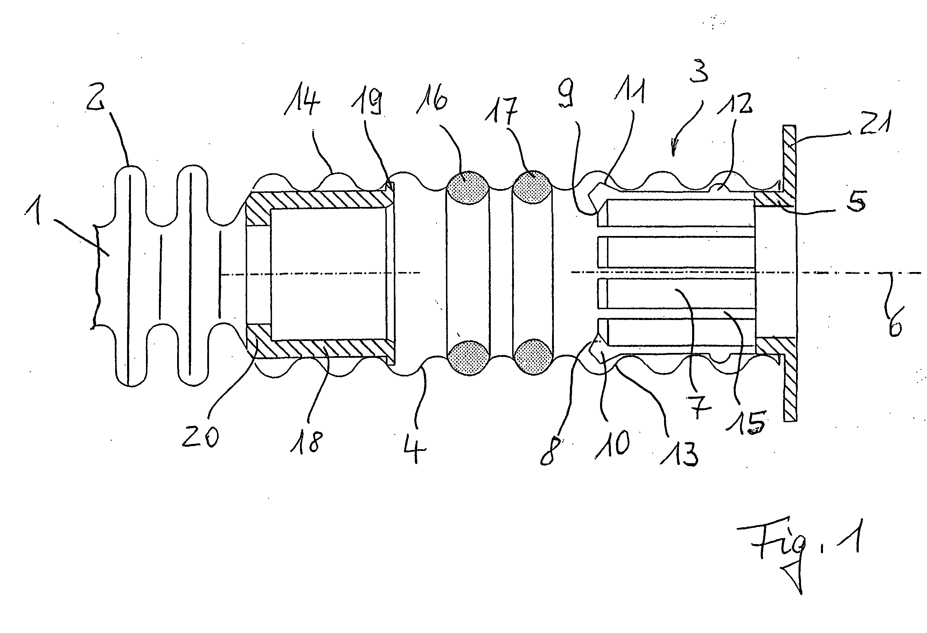

Figur 1 zeigt ein Ende eines Schlauches 1 beispielsweise aus Metall mit Ringwellen 2. In das Schlauchende eingesetzt und mit diesem über seine Außenkontur formschlüssig verbunden ist ein Halteelement 3 beispielsweise aus Kunststoff. Dieses Halteelement 3 weist einen im wesentlichen im Schlauchende 4 positionierten, endständigen und über den Umfang geschlossenen Tragring 5 auf, dessen Innendurchmesser dem Außendurchmesser eines nicht dargestellten Glattrohrendes entspricht und von dem zur Achse 6 des Schlauches 1 sich parallel erstreckende, gleichmäßig über den Umfang angeordnete und durch ihren gegenseitigen Abstand in Grenzen federnd radial bewegliche Haltefinger 7 ausgehen. Die Haltefinger haben bei ihren freien Enden eine nach radial innen gerichtete Abwinkelung 8 zur reibschlüssigen Arretierung des erwähnten Glattrohrendes, wozu die Abwinkelungen 8 sich bei entspanntem Zustand der Haltefinger 7 nach radial innen in den Bereich des Außenquerschnittes des Glattrohres erstrecken. Zur Herstellung eines besseren Reibschlusses sind die Abwinkelungen endständig mit einer winkeligen Kante 9 ausgestattet.

Darüber hinaus weisen die freien Enden der Haltefinger 7 jeweils eine nach radial außen gerichtete und in eine zugeordnete Welle des Schlauchendes 4 ragende Verdickung 10 auf, die über eine Schrägfläche 11 auf die Außenkontur des zugeordneten Haltefingers 7 übergeht. Im Bereich des sich an den Tragring 5 anschließenden Endes der Haltefinger 7 ist außerdem ein außen unterbrochen umlaufender Wulst 12 vorgesehen, der in eine zugeordnete Schlauchwelle ragt und dessen Querschnitt in Richtung der Schlauchachse 6 geringer als der entsprechende Querschnitt der genannten Schlauchwelle ist. Dabei ist vorgesehen, dass der axiale Abstand zwischen den Verdickungen 10 und dem Wulst 12 derart ausgebildet ist, dass das Halteelement 3 axial verschiebbar ist zwischen einer Stellung, bei der die Verdickungen 10 ohne Berührung mit einer axial benachbarten Flanke der zugeordneten Schlauchwelle sind, und einer Stellung, bei der die Verdickungen 10 durch die in Richtung auf das Schlauchende axial benachbarte Flanke 13 der zugeordneten Schlauchwelle in Richtung einer Schwenkung der Haltefinger 7 nach radial innen belastet sind.

Wie aus der Zeichnung ersichtlich, ist das Schlauchende 4 gegenüber dem übrigen Schlauch axial gestreckt, so dass an ihm flachere Schlauchwellen 14 ausgebildet sind, die gegenüber den Schlauchwellen 2 einen geringeren Außendurchmesser sowie einen größeren Innendurchmesser ausbilden. In das so gestaltete Schlauchende kann nun das Halteelement 3 unter radialer Einschwenkung der Haltefinger 7 eingeschoben werden, wobei die Verdickungen 10 bei entsprechender Breite des zwischen den Haltefingern 7 bestehenden Abstandes 15 weit genug nach radial innen schwenkbar sind, um die Montage des Halteelementes 3 zu ermöglichen.

Axial neben dem Halteelement 3 sitzen in benachbarten Wellen des Schlauchendes 4 zwei Dichtungsringe 16, 17, die entsprechend der flachen Ausbildung der Wellen 14 einen linsenförmigen Querschnitt aufweisen und deren Innendurchmesser in der erforderlichen Weise dem Außendurchmesser des nicht dargestellten Glattrohrendes entspricht.

In Axialrichtung noch weiter vom Halteelement 3 fort nimmt das gestreckte Schlauchende 4 schließlich eine Führungshülse 18 auf, deren Innendurchmesser den Außendurchmesser des nicht dargestellten Glattrohrendes entspricht und deren Außendurchmesser im Innendurchmesser des gereckten Schlauchendes entspricht. Die Führungshülse findet in Steckrichtung selbst ihren Axialanschlag an dem weiter nach radial innen gehenden, ungereckten Abschnitt des Schlauches 1 sowie mit einem endständigen radialen Bund 19 an einer Flanke einer Welle des gereckten Schlauchendes, wobei der Außendurchmesser des Bundes 19 so zu bemessen ist, dass sich die Führungshülse 18 unter geringer Aufweitung des Schlauchendes 4 in die ersichtliche Position schieben lässt. Um dem nicht dargestellten Glattrohrende einen Axialanschlag zu geben, weist die Führungshülse außerdem an dem in Steckrichtung des Glattrohrendes vorne liegenden Ende eine radiale Verjüngung 20 auf.

Wird bei der so beschriebenen Anordnung ein Glattrohr eingesteckt, so passiert dieses unter radialer Querschnittsaufweitung die Abwinkelungen 8 der Haltefinger 7, anschließend unter entsprechender radialer Verdrängung die Dichtungsringe 16, 17 und schließlich die Führungshülse 18 soweit, bis es gegen die Verjüngung 20 stößt. In dieser Position ist das Glattrohrende durch den mit den Verdickungen 8 gebildeten Reibschluss gehalten. Ein Lösen dieser Verbindung insbesondere unter dem im Schlauch 1 herrschenden Innendruck ist nicht möglich. Denn dabei nimmt das Glattrohrende das Halteelement 3 bezogen auf Figur 1 nach rechts mit, was dazu führt, dass die Schrägflächen 11 gegen die benachbarte Wellenflanke 13 laufen. Dies bewirkt die Beaufschlagung der freien Enden der Haltefinger 7 mit einer nach radial innen gerichteten Kraft, die den Reibschluss zwischen Glattrohrende und Abwinkelungen 8 vergrößert, somit also eine weitere Bewegung des Glattrohrendes aus der Steckverbindung heraus blockiert, andererseits aber auch eine Zentrierung und radiale Halterung des Glattrohrendes bewirkt, so dass hierzu ansich der dem Außendurchmesser des Glattrohrendes angepaßte Innendurchmesser des Tragrings 5 nicht erforderlich ist.

Um andererseits eine Demontage der beschriebenen Steckverbindung zu ermöglichen, ist es entsprechend erforderlich, das Halteelement 3 an dem beschriebenen Mitwandern mit dem aus der Verbindung herauszuziehenden Glattrohrende zu hindern bzw. gegen diese Mitwanderbewegung festzuhalten. Um das zu ermöglichen bzw. zu erleichtern, ist der Tragring 5 das Schlauchende 14 überragend ausgebildet und an seinem freien Ende mit einem sich nach radial außen erstreckenden, vom Schlauchende stets axial beabstandeten Bund 21 versehen, der als Handhabe dienen kann, um das Halteelement 3 bezogen auf Figur 1 nach links in das Schlauchende 14 hineinzuschieben bzw. axial festzuhalten, so dass die Schrägflächen 11 nicht an die Flanke 13 gelangen können und folglich auch keine Erhöhung des Reibschlusses zwischen den Verdickungen 8 und dem Glattrohrende eintreten kann.

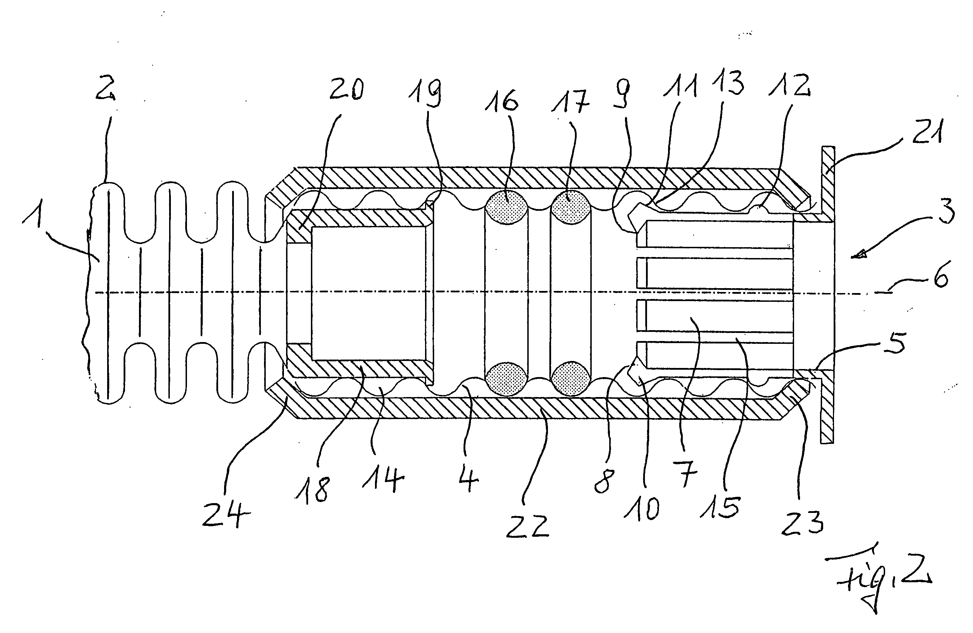

Figur 2 zeigt eine Weiterbildung des Gegenstandes gemäß Figur 1, wobei die bereits eingeführte Bezifferung ohne Beschreibungswiederholung erneut verwendet ist soweit der Gegenstand gemäß Figur 1 bei der Ausführungsform gemäß Figur 2 wiederkehrt.

Im Unterschied zum Gegenstand gemäß Figur 1 ist bei der Ausführungsform gemäß Figur 2 auf das gestreckte Schlauchende 4 eine Stützhülse 22 beispielsweise aus Metall aufgesetzt, deren Innendurchmesser den Außendurchmesser des gestreckten Schlauchendes 14 entspricht und die durch endständige Abwinkelungen 23, 24 die endständigen Wellen 14 des gestreckten Schlauchendes 4 hintergreift. Aufgabe dieser Stützhülse ist es, die der Steckverbindung dienenden Bauteile Halteelement 3, Dichtungsringe 16, 17 und Führungshülse 18 bezüglich der Schlauchachse 6 in Flucht zu halten, um dadurch die Handhabung insbesondere beim Einstecken des Glattrohrendes zu erleichtern und es im übrigen nicht allein dem Glattrohrende zu überlassen, die genannten Bauteile auf Flucht zu halten.

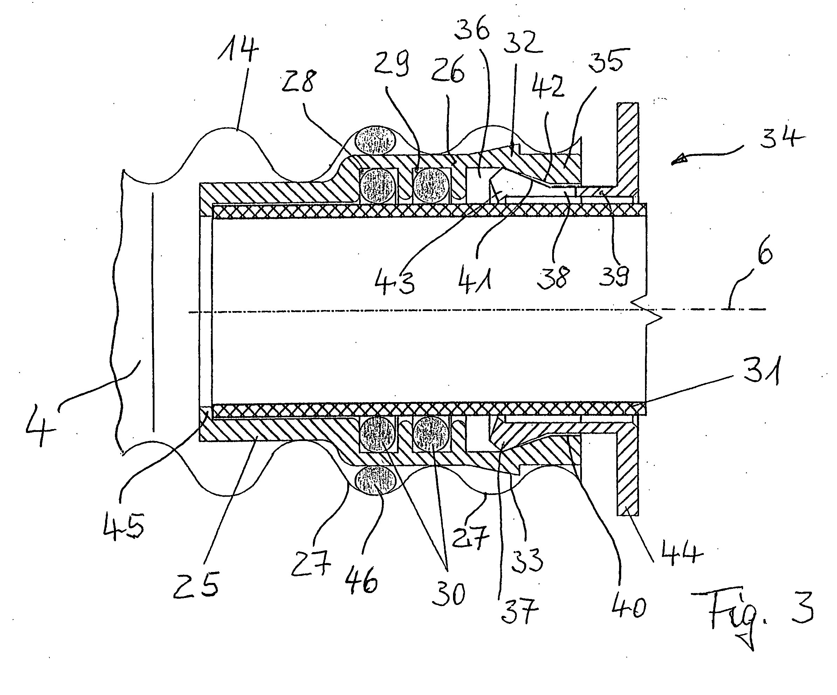

Bei der anderen Bauform gemäß Figur 3 ist wieder von einem gestreckten Ende 4 eines Ringwellschlauches mit bezogen auf den übrigen Schlauch flacheren Wellen 14 ausgegangen. Hier ist in Abwandlung zu den anhand der Figuren 1 und 2 beschriebenen Bauformen die Führungshülse 25 mit einer bis zum freien Ende des Schlauchendes 4 reichenden Verlängerung 26 einstückig verbunden, deren Außendurchmesser größer als der Außendurchmesser der Führungshülse 25 ist und die folglich in radial stärker aufgeweiteten Wellen 27 des freien Endes des gestreckten Schlauchendes 4 sitzt.

Die Verlängerung 26 weist im Anschluss an die Führungshülse 25 Ringnuten 28, 29 für Dichtungsringe 30 auf, die den Dichtungsring 16, 17 gemäß Figur 1 und 2 entsprechen und das eingesteckte Glattrohrende 31 außen dichtend umfangen. Um die Abdichtung der Steckverbindung zu vervollständigen, ist die Verlängerung 26 außen von einem Dichtring 46 umgeben, der am Schlauchende 4 seine Widerlagerung in einer der Wellen 27 findet.

Wie ersichtlich, lässt sich das aus Führungshülse 25 und Verlängerung 26 gebildete Bauteil ohne Schwierigkeiten in das Schlauchende 4 einstecken, wobei auf dem Umfang der Verlängerung 26 angeordnete Rastnasen 32 mit einer der Wellen 27 in Eingriff gelangen, indem sie in den Querschnitt dieser Welle ragen. Um das Einstecken des genannten Bauteils zu erleichtern, sind die Rastnasen 32 auf ihrer dem Schlauchende abgewandten Seite mit einer Schrägfläche 33 versehen, mit Hilfe derer beim Einstecken des genannten Bauteils eine radiale Aufweitung des Schlauchendes vorgenommen werden kann, um die Rastnasen 32 in die Schlauchwelle 27 zu bringen.

In das freie Ende der Verlängerung 26 ist nun ein Halteelement 34 der Gestaltung eingesetzt, wie es bereits bei den Bauformen gemäß Figur 1 und 2 verwendet und beschrieben wurde. Dazu bildet dieses freie Ende 35 eine Ringkammer 36 zur Aufnahme der Verdickungen 37 der Haltefinger 38, die wieder von einem endständigen Tragring 39 ausgehen und von einem Bohrungsdurchmesser 40 des freien Endes 35 umfangen sind, der kleiner als der Außendurchmesser der Ringkammer 36 ist. Auch hier gehen die Verdickungen 37 über eine Schrägfläche 41 in die Haltefinger 38 über, wobei dieser Schrägfläche 41 eine entsprechende Schrägfläche 42 des freien Endes 35 gegenübersteht, die den Außendurchmesser der Ringkammer 36 mit dem Bohrungsdurchmesser 40 verbindet.

Schließlich haben auch hier die Haltefinger 38 zum Reibschluss gegenüber dem Glattrohrende 31 endständige und nach innen vorstehende Abwinkelungen 43 und es schließt sich an den Tragring 39 endständig ein nach radial außengehender Bund 44 als Handhabe zur axialen Halterung bzw. Verschiebung des Halteelementes 34 an.

Infolge der insoweit mit den Bauformen gemäß Figur 1 und 2 übereinstimmenden Konstruktion gestaltet sich auch das Einstecken des Glattrohrendes 31 bis zu einem Axialanschlag 45 der Führungshülse 25 und das wieder herausnehmen des Glattrohrendes 31 aus dieser Steckverbindung in der bereits beschriebenen Weise, wobei insbesondere durch die Schrägflächen 41, 42 ein unbeabsichtigtes Lösen der Steckverbindung wirksam verhindert ist.

Die anhand der Figur 3 beschriebene Bauform bedeutet gegenüber den Bauformen gemäß Figur 1 und 2 zwar einen geringfügig höheren Materialaufwand. Durch die zusätzliche Einführung der Verlängerung 26 ist jedoch erreicht, dass sich die aus Führungshülse 25 und Verlängerung 26 mit den darin enthaltenen Teilen gebildete Baueinheit zunächst ohne Vorhandensein des ringgewellten Schlauches vormontieren sowie auf Lager halten lässt, womit die Montagearbeit erleichtert und eine erforderliche Lagerhaltung reduziert sein kann.

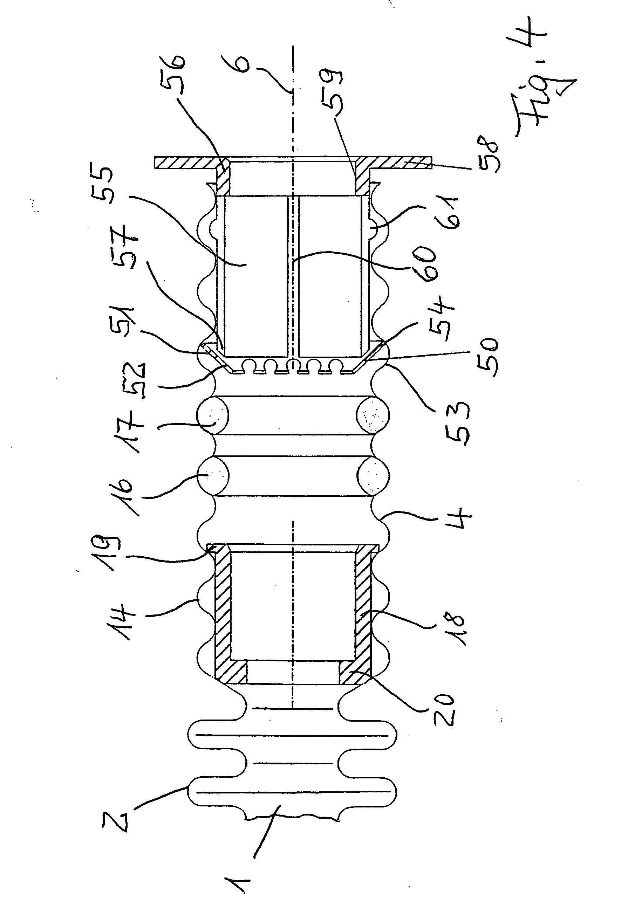

Figur 4 zeigt eine weitere Bauform, die in Teilen mit dem Gegenstand gemäß Figur 1 übereinstimmt, weshalb ohne Wiederholung der Beschreibung insoweit die dortige Bezifferung auch in Figur 4 verwendet ist.

Der wesentliche Unterschied besteht darin, dass gemäß Figur 4 das Halteelement als sich im wesentlichen konisch von der Öffnung des Schlauchendes 4 fort nach radial innen verjüngender Federring 50 ausgebildet ist, der ausgehend von einem in Umfangsrichtung durchgehenden Ringkörper 51 gleichmäßig über den Umfang verteilte und sich von der Öffnung des Schlauchendes 4 fort schräg nach radial innen erstreckende Federzungen 52 aufweist. Die Federzungen beschreiben mit ihren radial innenliegenden, freien Enden einen Umfang, der geringer als der Umfang des nicht dargestellten Glattrohrendes ist. Andererseits ist der Außendurchmesser des Ringkörpers 51 so bemessen, dass er geringer als der Außendurchmesser der zugeordneten Schlauchwelle 53, andererseits aber größer als der freie Innenquerschnitt des Schlauchendes 4 ist.

Um den Federring 50 montieren zu können, ist er beziehungsweise sein Ringkörper 51 mit einer über den gesamten radialen Querschnitt gehenden Trennfuge 54 versehen, so dass der Federring 50 sich in an sich bekannter Weise radial derart zur Montage verjüngen lässt, dass dabei sein Außendurchmesser geringer als der lichte Querschnitt des Schlauchendes 4 ist. Nach der Positionierung in der zugeordneten Schlauchwelle 53 weitet sich der Federring 50 unter seiner Federkraft dann radial in die aus Figur 4 ersichtliche Position auf.

Wird nun ein Glattrohrende eingesteckt, so schwenkt dieses die Federzungen 52 entsprechend seinem Außenquerschnitt nach radial außen, so dass bei eingestecktem Glattrohrende die Federzungen mit ihren freien Enden auf dem Mantel des Glattrohrendes anliegen. Will sich nun unter dem üblicherweise im Schlauch herrschenden Innendruck das Glattrohrende durch - bezogen auf Figur 4 - Verschiebung nach rechts aus der Steckverbindung lösen, schwenken die Federzungen 52 vorliegend entgegen dem Uhrzeigersinn und verkrallen sich dabei im Mantel des Glattrohrendes. Durch die Schlitzung 54 des Federringes 50 geht damit eine radiale Aufweitung des Federringes 50 einher, die jedoch ihr Ende findet, wenn der Außenumfang des Ringkörpers 51 seine Abstützung an der zugeordneten Schlauchwelle 53 findet, wobei gleichzeitig eine Zentrierung und radiale Abstützung des Glattrohrendes aufgebaut ist.

Um auch diese Steckverbindung gewollt lösen zu können, ist dem Federring 50 in Richtung auf die Öffnung des Schlauchendes 4 vorgelagert in das Schlauchende eine Entriegelungshülse 55 eingesetzt, die das Schlauchende 4 nach außen mit ihrem einen Ende 56 axial überragt und mit ihrem anderen Ende 57 bis an die Federzungen 52 reicht. Zur leichteren Handhabung ist das eine Ende 56 der Entriegelungshülse mit einem sich nach radial außen erstreckenden, vom Schlauchende axial beabstandeten Bund 58 versehen.

Um die Entriegelungshülse 55 unverlierbar im Schlauchende 4 anzuordnen, ist in weiterer konstruktiver Ausgestaltung das eine Ende 56 der Entriegelungshülse 55 als über den Umfang geschlossener Ring mit einem dem Außendurchmesser des Glattrohrendes entsprechenden Innendurchmesser 59 ausgebildet. Von dem das eine Ende 56 bildenden Ring ausgehend weist die übrige Länge der Entriegelungshülse 55 achsparallele, gleichmäßig über den Umfang verteilt angeordnete und zum anderen Ende 57 der Entriegelungshülse 55 hin offene Längsschlitze 60 auf und trägt andererseits einen außen unterbrochen umlaufenden und in eine zugeordnete Schlauchwelle ragenden Wulst 61, dessen Querschnitt in Richtung der Schlauchachse 6 geringer als der entsprechende Querschnitt der Schlauchwelle ist. Dadurch, dass die übrige Länge der Entriegelungshülse mit den erwähnten Längsschlitzen 60 versehen ist, lässt sich zur Montage der Entriegelungshülse deren Durchmesser verringern, so dass der Wulst 61 ungehindert bis zur zugeordneten Schlauchwelle eingeführt werden kann.

Soll nun die Steckverbindung eines Glattrohrendes gelöst werden, so kann die Entriegelungshülse 55 mittels der durch den Bund 58 gegebenen Handhabe bezogen auf Figur 4 axial nach links verschoben werden solange, bis durch das andere Ende 57 die Federzungen 52 vorliegend im Uhrzeigersinne nach radial außen geschwenkt werden und sich dabei vom Glattrohrende abheben, so dass letzteres ungehindert ausgezogen werden kann.

Auch bei der Bauform gemäß Figur 4 kann es zweckmäßig sein, eine Stabilisierung durch eine äußere Stützhülse entsprechend der Stützhülse 22 in Figur 2 vorzunehmen.

## Patentansprüche

1. Steckverbindung zwischen einem ringgewellten Schlauch (1) und einem Glattrohr (31), wobei mit dem Schlauchende (4) ein das Glattrohr (31) umgebendes Halteelement (3, 34) zum Festhalten des Glattrohres (31) wenigstens mittelbar verbunden und das Glattrohrende von wenigstens einem dem Halteelement (3, 34) in Richtung auf den Schlauch (1) vorgelagerten Dichtungsring (16, 17, 30) umfangen ist, der seinerseits wenigstens mittelbar dichtend mit dem Schlauch (1) in Verbindung steht,
**dadurch gekennzeichnet,**
**dass** das Halteelement (3, 34, 50) im Schlauchende (4) angeordnet und von diesem wenigstens mittelbar durch gegenseitigen formschlüssigen Eingriff in Axialrichtung gehalten ist, und dass dem Halteelement (3, 34, 50) jenseits der Dichtung (16, 17, 30) eine Führungshülse (18, 25) mit einem dem Außendurchmesser des Glattrohres (31) entsprechenden Innendurchmesser vorgelagert ist, die durch den Schlauch (1) radial praktisch spielfrei und wenigstens mittelbar durch gegenseitigen formschlüssigen Eingriff in Axialrichtung gehalten ist.

2. Steckverbindung nach Anspruch 1,
**dadurch gekennzeichnet,**
**dass** der Halteelement (3, 34, 50) und Führungshülse (18, 25) aufnehmende Endabschnitt (4) des Schlauches (1) in Richtung auf eine Abflachung der Schlauchwellen (14, 27) gestreckt ist.

3. Steckverbindung nach Anspruch 1 oder 2,
**dadurch gekennzeichnet,**
**dass** der Dichtungsring (16, 17) in eine zwischen Halteelement (3) und Führungshülse (18) gelegene Welle (14) des Schlauches (1) von innen eingesetzt ist.

4. Steckverbindung nach Anspruch 3,
**dadurch gekennzeichnet,**
**dass** bei wenigstens zwei in benachbarten Schlauchwellen (14) angeordneten Dichtungsringen (16, 17) diese durch eine Brücke miteinander verbunden sind, die das zwischen den Schlauchwellen (14) gelegene Wellental der Schlauchprofilierung außerhalb der Außenkontur des Glattrohres übergreift.

5. Steckverbindung nach Anspruch 2, 3 oder 4,
**dadurch gekennzeichnet,**
**dass** der Dichtungsring (16, 17) einen den gestreckten Schlauchwellen (14) angepassten, linsenförmigen Axialquerschnitt aufweist.

6. Steckverbindung nach einem oder mehreren der Ansprüche 1 bis 5,
**dadurch gekennzeichnet,**
**dass** das Halteelement (3) ausgehend von einem im wesentlichen im Schlauchende (4) positionierten, endständigen, über den Umfang geschlossenen und gegebenenfalls mit seinem Innendurchmesser dem Außendurchmesser des Glattrohrendes entsprechenden Tragring (5) sich in den Schlauch (1) parallel zu dessen Achse (6) erstreckende und gleichmäßig über den Umfang angeordnete, in Grenzen federnd radial bewegliche und in Umfangsrichtung einen gegenseitigen Abstand (15) aufweisenden Haltefinger (7) aufweist, und dass die Haltefinger (7) an ihren freien Enden eine nach radial innen gerichtete Abwinkelung (8) zur reibschlüssigen Arretierung des Glattrohres aufweisen, wozu die Abwinkelungen (8) sich bei entspanntem Zustand der Haltefinger (7) endständig nach radial innen in den Bereich des Außenquerschnittes des Glattrohres erstrecken.

7. Steckverbindung nach Anspruch 6,
**dadurch gekennzeichnet,**
**dass** an den Abwinkelungen (8) endständig eine winkelige Kante (9) zur wenigstens reibschlüssigen Anlage am Glattrohr ausgebildet ist.

8. Steckverbindung nach Anspruch 6 oder 7,
**dadurch gekennzeichnet,**
**dass** die freien Enden der Haltefinger (7) eine nach radial außen gerichtete und in eine zugeordnete Welle (14) des Schlauches (1) ragende Verdickung (10) aufweisen, dass das Halteelement (3) im Bereich des an den Tragring (5) anschließenden Endes der Haltefinger (7) einen außen unterbrochen umlaufenden und in eine zugeordnete Schlauchwelle (14) ragenden Wulst (12) aufweist, dessen Querschnitt in Richtung der Schlauchachse (6) geringer als der entsprechende Querschnitt der Schlauchwelle (14) ist, und dass der axiale Abstand zwischen den Verdickungen (10) der Haltefinger (7) und dem Wulst (12) derart ausgebildet ist, dass das Halteelement (3) axial verschiebbar ist zwischen einer Stellung, bei der die Verdickungen (10) ohne Berührung mit einer axial benachbarten Flanke der zugeordneten Schlauchwelle (14) sind, und einer Stellung, bei der die Verdickungen (10) durch die in Richtung auf das Schlauchende axial benachbarte Flanke (13) der zugeordneten Schlauchwelle (14) in Richtung einer Schwenkung der Haltefinger (7) nach radial innen belastet sind.

9. Steckverbindung nach einem oder mehreren der Ansprüche 6 bis 8,
**dadurch gekennzeichnet,**
**dass** der Tragring (5) das Schlauchende (4) nach außen überragt und dort endständig einen sich nach radial außen erstreckenden, vom Schlauchende stets axial beabstandeten Bund (21) aufweist.

10. Steckverbindung nach einem oder mehreren der Ansprüche 1 bis 5,
**dadurch gekennzeichnet,**
**dass** das Halteelement durch einen in eine Welle (53) des Schlauchendes (4) eingesetzten Federring (50) gebildet ist, dass der Federring (50) ausgehend von einem Ringkörper (51) gleichmäßig über den Umfang verteilte und sich vom Schlauchende (4) in Richtung auf den Schlauch (1) schräg nach radial innen erstreckende Federzunge (52) aufweist, dass der von den freien Enden der Federzungen (52) umschriebene Querschnitt geringer als der Außenquerschnitt des Glattrohrendes ist, und dass der Außendurchmesser des Federringes (50) bzw. dessen Ringkörpers (51) geringer als der Außendurchmesser der zugeordneten Schlauchwelle (53) aber größer als der freie Innenquerschnitt des Schlauches (4) ist.

11. Steckverbindung nach Anspruch 10,
**dadurch gekennzeichnet,**
**dass** der Federring (50) eine über seinen gesamten radialen Querschnitt gehende Trennfuge (54) aufweist.

12. Steckverbindung nach einem der Ansprüche 10 oder 11,
**dadurch gekennzeichnet,**
**dass** der Federring (50) aus Federstahlblech besteht.

13. Steckverbindung nach einem oder mehreren der Ansprüche 10 bis 12,
**dadurch gekennzeichnet,**
**dass** dem Federring (50) in Richtung auf die Öffnung des Schlauchendes (4) vorgelagert in das Schlauchende (4) eine Entriegelungshülse (55) mit einem dem Außendurchmesser des Glattrohres entsprechenden Innendurchmesser (59) eingesetzt ist, dass die Entriegelungshülse (55) das Schlauchende (4) nach außen mit ihrem einen Ende (56) axial überragt, und dass durch das andere Ende (57) der Entriegelungshülse (55) bei deren entsprechender Axialverschiebung die Federzungen (52) nach radial außen schwenkbar sind.

14. Steckverbindung nach Anspruch 13,
**dadurch gekennzeichnet,**
**dass** das eine Ende (56) der Entriegelungshülse (55) einen sich nach radial außen erstreckenden, vom Schlauchende axial beabstandeten Bund (58) aufweist.

15. Steckverbindung nach Anspruch 13 oder 14,
**dadurch gekennzeichnet,**
**dass** das eine Ende (56) der Entriegelungshülse (55) als über den Umfang geschlossener Ring mit einem dem Außendurchmesser des Glattrohrendes entsprechenden Innendurchmesser (59) ausgebildet ist, dass die übrige Länge der Entriegelungshülse (55) achsparallele, gleichmäßig über den Umfang verteilt angeordnete und zum anderen Ende (57) der Entriegelungshülse (55) hin offene Längsschlitze (60) aufweist, dass die übrige Länge der Entriegelungshülse (55) einen außen unterbrochen umlaufenden und in eine zugeordnete Schlauchwelle ragenden Wulst (61) aufweist, dessen Querschnitt in Richtung der Schlauchachse (6) geringer als der entsprechende Querschnitt der Schlauchwelle ist, und dass der Wulst (61) an der Entriegelungshülse (55) eine Axialposition hat, die die Axialverschiebung der Entriegelungshülse (55) zum Verschwenken der Federzungen (52) erlaubt.

16. Steckverbindung nach einem oder mehreren der Ansprüche 1 bis ,15
**dadurch gekennzeichnet,**
**dass** die Führungshülse (18) an ihrem vom Schlauchende weiter entfernten Ende eine Verjüngung (20) des Innenquerschnittes als Axialanschlag für das Glattrohrende und an ihrem anderen Ende einen nach radial außen vorstehenden Bund (19) zum formschlüssigen Eingriff in eine zugeordnete Schlauchwelle (14) aufweist.

17. Steckverbindung nach einem oder mehreren der Ansprüche 1 bis 16,
**dadurch gekennzeichnet,**
**dass** außen auf den Schlauch (4) eine axial den Abschnitt vom Schlauchende bis einschließlich den von der Führungshülse (18) eingenommenen Bereich übergreifende, hohlzylindrische Stützhülse (22) aufgesetzt ist, deren Innendurchmesser dem Außendurchmesser des Schlauches (4) entspricht und die durch endständige, Schlauchwellen (14) hintergreifende Abwinkelungen (23, 24) gegen Axialverschiebung gesichert ist.

18. Steckverbindung nach Anspruch 1 oder 2,
**dadurch gekennzeichnet,**
**dass** die Führungshülse (25) eine bis zum Schlauchende reichende, im wesentlichen hohlzylindrische Verlängerung (26) aufweist, dass zwischen dem so gebildeten Bauteil und Schlauch (4) ein formschlüssiger Eingriff wenigstens gegen Axialverschiebung zum Schlauchende hin gegeben ist, dass das Bauteil auf seinem Außenmantel wenigstens einen mit einer zugeordneten Schlauchwelle (14) in dichtendem Eingriff befindlichen Dichtring (46) trägt, dass die Verlängerung (26) wenigstens eine innere Ringkammer (28, 29) zur Aufnahme des Dichtungsringes (30) für das Glattrohr (31) aufweist, und dass in der Verlängerung (26) an ihren der Führungshülse (25) abgewandten Ende das Halteelement (34) sitzt.

19. Steckverbindung nach Anspruch 18,
**dadurch gekennzeichnet,**
**dass** die Verlängerung (26) im Außenquerschnitt größer als die Führungshülse (25) ist und in einem im Querschnitt entsprechend aufgeweiteten Schlauchende sitzt.

20. Steckverbindung nach Anspruch 18 oder 19,
**dadurch gekennzeichnet,**
**dass** der formschlüssige Eingriff zwischen Bauteil (25, 26) und Schlauch (4) durch auf der Verlängerung (26) über wenigstens einen Umfang gleichmäßig verteilt angeordnete und nach radial außen in eine zugeordnete Schlauchwelle (27) ragende Rastnasen (32) gegeben ist, und dass die Rastnasen (32) auf ihrer dem Schlauchende abgewandten Seite eine Schrägfläche (33) aufweisen, die mit der Richtung der Schlauchachse (6) einen flachen Winkel einschließt.

21. Steckverbindung nach einem der Ansprüche 18 bis 20,
**dadurch gekennzeichnet,**
**dass** das Halteelement (34) ausgehend von einem im wesentlichen im Bereich des freien Endes der Verlängerung (26) positionierten, endständigen, über den Umfang geschlossenen und gegebenenfalls mit seinem Innendurchmesser dem Außendurchmesser des Glattrohrendes entsprechenden Tragring (39) sich in die Verlängerung (26) parallel zur Schlauchachse (6) erstreckende und gleichmäßig über den Umfang angeordnete, in Grenzen federnd radial bewegliche und in Umfangsrichtung einen gegenseitigen Abstand aufweisende Haltefinger (38) aufweist, und dass die Haltefinger (38) an ihren freien Enden nach radial innen gerichtete Abwinkelungen (43) zur reibschlüssigen Arretierung des Glattrohres (31) aufweisen, wozu die Abwinkelungen (43) sich bei entspanntem Zustand der Haltefinger (38) endständig nach radial innen in den Bereich des Außenquerschnittes des Glattrohres (31) erstrecken.

22. Steckverbindung nach Anspruch 21,
**dadurch gekennzeichnet,**
**dass** an den Abwinkelungen endständig eine winkelige Kante zur wenigstens reibschlüssigen Anlage am Glattrohr (31) ausgebildet ist.

23. Steckverbindung nach Anspruch 21 oder 22,
**dadurch gekennzeichnet,**
**dass** die freien Enden der Haltefinger (38) eine nach radial außen gerichtete und in eine radiale Erweiterung (36) des freien Innenquerschnittes der Verlängerung (26) ragende Verdickung (37) aufweisen, dass der Außenquerschnitt jeder Verdickung (37) über eine sich in Richtung auf den Tragring (39) erstreckende, gegenüber der Achsrichtung (6) des Schlauches (4) einen flachen Winkel bildende Schrägfläche (41) mit der Außenfläche des zugeordneten Haltefingers (38) verbunden ist, und dass die Erweiterung (36) eine mit den Schrägflächen (41) korrespondierende Abschrägung (42) aufweist.

24. Steckverbindung nach einem der Ansprüche 21 bis 23,
**dadurch gekennzeichnet,**
**dass** der Tragring (39) das freie Ende der Verlängerung (26) nach außen überragt und dort endständig einen sich nach radial außen erstreckenden, vom Ende der Verlängerung (26) stets axial beabstandeten Bund (44) aufweist.

25. Steckverbindung nach einem oder mehreren der Ansprüche 21 bis 24,
**dadurch gekennzeichnet,**
**dass** die Führungshülse (25) an ihrem vom freien Ende des Schlauches (4) bzw. der Verlängerung (26) weiter entfernten Ende eine Verjüngung (45) des Innenquerschnittes als Axialanschlag für das Glattrohrende (31) aufweist.

## Claims

1. Plug-in connection between an annularly corrugated flexible tube (1) and a plain-ended pipe (31), there being at least indirectly connected to the end (4) of the flexible tube a holding element (3, 34) which surrounds the plain-ended pipe (31) in order to hold the plain-ended pipe (31) in position and the end of the plain-ended pipe being encompassed by at least one sealing ring (16, 17, 30) arranged upstream of the holding element (3, 34) in the direction towards the flexible tube (1), which sealing ring (16, 17, 30) is in turn sealingly connected, at least indirectly, to the flexible tube (1),
**characterised in that**
the holding element (3, 34, 50) is arranged in the end (4) of the flexible tube and is held in the axial direction at least indirectly by interlocking engagement therewith; and there is arranged upstream of the holding element (3, 34, 50) on the other side of the seal (16, 17, 30) a guide sleeve (18, 25) the internal diameter of which corresponds to the external diameter of the plain-ended pipe (31), which guide sleeve (18, 25) is held by the flexible tube (1) virtually without play radially and at least indirectly by interlocking engagement therewith in the axial direction.

2. Plug-in connection according to claim 1,
**characterised in that**
the end portion (4) of the flexible tube (1) that accommodates the holding element (3, 34, 50) and the guide sleeve (18, 25) is elongated in the sense of a flattening of the flexible tube corrugations (14, 27).

3. Plug-in connection according to claim 1 or 2,
**characterised in that**
the sealing ring (16, 17) is inserted, from the inside, into a corrugation (14) of the flexible tube (1) that is located between the holding element (3) and the guide sleeve (18).

4. Plug-in connection according to claim 3,
**characterised in that**
when at least two sealing rings (16, 17) are arranged in adjacent corrugations (14) of the flexible tube, those rings are connected to one another by a bridge which engages over the trough between the corrugations (14) of the flexible tube profile outside the outer contour of the plain-ended pipe.

5. Plug-in connection according to claim 2, 3 or 4,
**characterised in that**
the sealing ring (16, 17) has a lenticular axial cross-section matched to the elongated flexible tube corrugations (14).

6. Plug-in connection according to one or more of claims 1 to 5,
**characterised in that**
the holding element (3), starting from a terminal support ring (5) which is positioned substantially in the end (4) of the flexible tube and is closed over its circumference and the internal diameter of which may correspond to the external diameter of the end of the plain-ended pipe, has holding fingers (7) which extend into the flexible tube (1) parallel to the axis (6) thereof and are arranged uniformly around the circumference, the holding fingers (7) being capable of a certain degree of resilient radial movement and being spaced (15) apart from one another circumferentially; and the holding fingers (7) have at their free ends a radially inwardly directed angled portion (8) for frictional retention of the plain-ended pipe, for which purpose, when the holding fingers (7) are in the unstressed state, the angled portions (8) extend radially inwards at their ends into the region of the external cross-section of the plain-ended pipe.

7. Plug-in connection according to claim 6,
**characterised in that**
the angled portions (8) are provided at their ends with an angular edge (9) for at least frictional contact with the plain-ended pipe.

8. Plug-in connection according to claim 6 or 7,
**characterised in that**
the free ends of the holding fingers (7) have a radially outwardly directed thickened portion (10) which projects into an associated corrugation (14) of the flexible tube (1); the holding element (3) has, in the region of the end of the holding fingers (7) that adjoins the support ring (5), a bead (12) which extends non-continuously around the outer circumference and projects into an associated flexible tube corrugation (14), the cross-section of the bead (12) being smaller in the direction of the flexible tube axis (6) than the corresponding cross-section of the flexible tube corrugation (14); and the axial spacing between the thickened portions (10) of the holding fingers (7) and the bead (12) is such that the holding element (3) is axially displaceable between a position in which the thickened portions (10) are not in contact with an axially adjacent flank of the associated flexible tube corrugation (14) and a position in which the thickened portions (10) are stressed radially inwards in the direction of pivoting of the holding fingers (7) by the flank (13) of the associated flexible tube corrugation (14) that is axially adjacent in the direction towards the end of the flexible tube.

9. Plug-in connection according to one or more of claims 6 to 8,
**characterised in that**
the support ring (5) projects outwards beyond the end (4) of the flexible tube and there has, at its end, a collar (21) which extends radially outwards and is always axially spaced apart from the end of the flexible tube.

10. Plug-in connection according to one or more of claims 1 to 5,
**characterised in that**
the holding element is formed by a spring ring (50) inserted into a corrugation (53) of the end (4) of the flexible tube; the spring ring (50), starting from a ring body (51), has arranged uniformly around its circumference spring tongues (52) which extend obliquely radially inwards from the end (4) of the flexible tube in the direction towards the flexible tube (1); the cross-section circumscribed by the free ends of the spring tongues (52) is smaller than the external cross-section of the end of the plain-ended pipe; and the external diameter of the spring ring (50), or the ring body (51) thereof, is smaller than the external diameter of the associated flexible tube corrugation (53) but greater than the free internal cross-section of the flexible tube (4).

11. Plug-in connection according to claim 10,
**characterised in that**
the spring ring (50) has a parting joint (54) extending across its entire radial cross-section.

12. Plug-in connection according to either one of claims 10 and 11,
**characterised in that**
the spring ring (50) consists of spring steel sheet.

13. Plug-in connection according to one or more of claims 10 to 12,
**characterised in that**
upstream of the spring ring (50) in the direction towards the opening in the end (4) of the flexible tube there is inserted into the end (4) of the flexible tube a release sleeve (55) the internal diameter (59) of which corresponds to the external diameter of the plain-ended pipe; one end (56) of the release sleeve (55) projects axially outwards beyond the end (4) of the flexible tube; and the spring tongues (52) are pivotable radially outwards by the other end (57) of the release sleeve (55) when the latter is displaced axially by an appropriate amount.

14. Plug-in connection according to claim 13,
**characterised in that**
the one end (56) of the release sleeve (55) has a collar (58) which extends radially outwards and is spaced apart axially from the end of the flexible tube.

15. Plug-in connection according to claim 13 or 14,
**characterised in that**
the one end (56) of the release sleeve (55) is in the form of a ring which is closed around its circumference, the internal diameter (59) of which ring corresponds to the external diameter of the end of the plain-ended pipe; the remaining length of the release sleeve (55) has, arranged uniformly around its circumference, axially parallel longitudinal slots (60) that are open towards the other end (57) of the release sleeve (55); the remaining length of the release sleeve (55) has a bead (61) which extends non-continuously around the outer circumference and projects into an associated flexible tube corrugation, the cross-section of which bead (61) is smaller in the direction of the flexible tube axis (6) than the corresponding cross-section of the flexible tube corrugation; and the axial position of the bead (61) on the release sleeve (55) is such that the release sleeve (55) can be displaced axially in order to pivot the spring tongues (52).

16. Plug-in connection according to one or more of claims 1 to 15,
**characterised in that**
the guide sleeve (18) has, at its end more remote from the end of the flexible tube, a portion (20) of reduced internal cross-section as an axial stop for the end of the plain-ended pipe and, at its other end, a radially outwardly projecting collar (19) for interlocking engagement with an associated flexible tube corrugation (14).

17. Plug-in connection according to one or more of claims 1 to 16,
**characterised in that**
there is positioned on the outside of the flexible tube (4) a hollow-cylindrical support sleeve (22) which engages axially over the portion extending from the end of the flexible tube up to and including the region occupied by the guide sleeve (18), the internal diameter of which support sleeve (22) corresponds to the external diameter of the flexible tube (4), and the support sleeve (22) is secured against axial displacement by terminal angled portions (23, 24) which engage behind corrugations (14) of the flexible tube.

18. Plug-in connection according to claim 1 or 2,
**characterised in that**
the guide sleeve (25) has a substantially hollow-cylindrical extension piece (26) which extends as far as the end of the flexible tube; the component so formed and the flexible tube (4) are arranged to be in interlocking engagement so as at least to counter axial displacement towards the end of the flexible tube; the component carries on its outer surface at least one sealing ring (46) which is located in sealing engagement with an associated flexible tube corrugation (14); the extension piece (26) has at least one inner annular chamber (28, 29) for accommodating the sealing ring (30) for the plain-ended pipe (31); and the holding element (34) is seated in the extension piece (26) at its end remote from the guide sleeve (25).

19. Plug-in connection according to claim 18,
**characterised in that**
the extension piece (26) is greater in external cross-section than the guide sleeve (25) and is seated in an end of the flexible tube that is correspondingly wider in cross-section.

20. Plug-in connection according to claim 18 or 19,
**characterised in that**
the interlocking engagement between the component (25, 26) and the flexible tube (4) is provided by locking lugs (32) which are arranged uniformly around at least one circumference of the extension piece (26) and project radially outwards into an associated flexible tube corrugation (27); and the locking lugs (32) have on their side facing the end of the flexible tube a sloping surface (33) which encloses a shallow angle with respect to the direction of the axis (6) of the flexible tube.

21. Plug-in connection according to any one of claims 18 to 20,
**characterised in that**
the holding element (34), starting from a terminal support ring (39) which is positioned substantially in the region of the free end of the extension piece (26) and is closed around its circumference and the internal diameter of which may correspond to the external diameter of the end of the plain-ended pipe, has holding fingers (38) which extend into the extension piece (26) parallel to the axis (6) of the flexible tube and are arranged uniformly around the circumference, the holding fingers (38) being capable of a certain degree of resilient radical movement and being spaced apart from one another circumferentially; and the holding fingers (38) have at their free ends radially inwardly directed angled portions (43) for frictional retention of the plain-ended pipe (31), for which purpose, when the holding fingers (38) are in the unstressed state, the angled portions (43) extend radially inwards at their ends into the region of the external cross-section of the plain-ended pipe (31).

22. Plug-in connection according to claim 21,
**characterised in that**
the angled portions are provided at their ends with an angular edge for at least frictional contact with the plain-ended pipe (31).

23. Plug-in connection according to claim 21 or 22,
**characterised in that**
the free ends of the holding fingers (38) have a radially outwardly directed thickened portion (37) which projects into a radial widened portion (36) of the free internal cross-section of the extension piece (26); the external cross-section of each thickened portion (37) is connected to the outer surface of the associated holding finger (38) by way of a sloping surface (41) which extends in the direction towards the support ring (39) and forms a shallow angle with respect to the axial direction (6) of the flexible tube (4); and the widened portion (36) has a sloping portion (42) corresponding to the sloping surfaces (41).

24. Plug-in connection according to any one of claims 21 to 23,
**characterised in that**
the support ring (39) projects outwards beyond the free end of the extension piece (26) and there has, at its end, a collar (44) which extends radially outwards and is always axially spaced apart from the end of the extension piece (26).

25. Plug-in connection according to one or more of claims 21 to 24,
**characterised in that**
the guide sleeve (25) has, at its end more remote from the free end of the flexible tube (4) or the extension piece (26), a portion (45) of reduced internal cross-section as an axial stop for the end of the plain-ended pipe (31).

## Revendications

1. Assemblage emboîté entre un tuyau souple (1) à ondulations annulaires et un tube lisse (31), un élément de maintien (3, 34) entourant le tube lisse (31) et destiné à maintenir bloqué le tube lisse (31) étant au moins indirectement assemblé à l'extrémité (4) du tuyau souple, et l'extrémité du tube lisse étant embrassée par au moins une bague d'étanchéité (16, 17, 30), montée en avant de l'élément de maintien (3, 34) en direction du tuyau souple (1), bague qui est elle-même au moins indirectement assemblée en étanchéité au tuyau souple (1),
**caractérisé en ce que** l'élément de maintien (3, 34, 50) est disposé dans l'extrémité (4) du tuyau souple et est maintenu par celle-ci en direction axiale au moins indirectement par engagement positif ou mécanique mutuel, et **en ce qu'**une douille de guidage (18, 25), ayant un diamètre intérieur correspondant au diamètre extérieur du tube lisse (31), est montée en avant de l'élément de maintien (3, 34, 50), au-delà du joint d'étanchéité (16, 17, 30), douille qui est maintenue, par le tuyau souple (1), radialement quasiment sans jeu et, en direction axiale, au moins indirectement par engagement positif ou mécanique mutuel.

2. Assemblage emboîté selon la revendication 1, **caractérisé en ce que** la partie terminale (4) du tuyau souple (1) qui reçoit l'élément de maintien (3, 34, 50) et la douille de guidage (18, 25) est étirée dans le sens d'un aplatissement des ondulations (14, 27) du tuyau souple.

3. Assemblage emboîté selon la revendication 1 ou 2, **caractérisé en ce que** la bague d'étanchéité (16, 17) est insérée de l'intérieur dans une ondulation (14) du tuyau souple (1) située entre l'élément de maintien (3) et la douille de guidage (18).

4. Assemblage emboîté selon la revendication 3, **caractérisé en ce que**, en présence d'au moins deux bagues d'étanchéité (16, 17) disposées dans des ondulations voisines (14) du tuyau souple, ces bagues sont mutuellement reliées par un pont qui recouvre, à l'extérieur du contour extérieur du tube lisse, le creux d'ondulation, situé entre les ondulations (14), du profilage du tuyau souple.

5. Assemblage emboîté selon la revendication 2, 3 ou 4, **caractérisé en ce que** la bague d'étanchéité (16, 17) présente une section axiale lenticulaire, adaptée aux ondulations étirées (14) du tuyau souple.

6. Assemblage emboîté selon une ou plusieurs des revendications 1 à 5, **caractérisé en ce que** l'élément de maintien (3) présente - à partir d'une bague porteuse (5) terminale, positionnée pour l'essentiel dans l'extrémité (4) du tuyau souple, fermée sur la circonférence et dont le diamètre intérieur correspond éventuellement au diamètre extérieur de l'extrémité du tube lisse - des doigts de maintien (7) s'étendant dans le tuyau souple (1) parallèlement à son axe (6), disposés uniformément sur la circonférence, à mobilité élastique limitée en direction radiale et présentant une distance mutuelle (15) en direction circonférentielle, et **en ce que** les doigts de maintien (7) présentent, à leurs extrémités libres, un coudage (8) dirigé radialement vers l'intérieur et destiné à bloquer le tube lisse par friction, les coudages (8), à cet effet, à l'état relâché des doigts de maintien (7), s'étendant terminalement radialement vers l'intérieur dans la région de la section extérieure du tube lisse.

7. Assemblage emboîté selon la revendication 6, **caractérisé en ce qu'**une arête angulaire (9) est configurée terminalement sur les coudages (8), pour l'application au moins par friction sur le tube lisse.

8. Assemblage emboîté selon la revendication 6 ou 7, **caractérisé en ce que** les extrémités libres des doigts de maintien (7) présentent un épaississement (10) dirigé radialement vers l'extérieur et dépassant dans une ondulation associée (14) du tuyau souple (1), **en ce que** l'élément de maintien (3) présente, dans la région de l'extrémité des doigts de maintien (7) qui se raccorde à la bague porteuse (5), un bourrelet (12) extérieurement entourant, interrompu et dépassant dans une ondulation associée (14) du tuyau souple, bourrelet dont la section dans la direction de l'axe (6) du tuyau souple est inférieure à la section correspondante de l'ondulation (14) du tuyau souple, et **en ce que** la distance axiale entre les épaississements (10) des doigts de maintien (7) et le bourrelet (12) est conçue de telle sorte que l'élément de maintien (3) est axialement coulissant entre une position dans laquelle les épaississements (10) sont sans contact avec un flanc axialement voisin de l'ondulation associée (14) du tuyau souple, et une position dans laquelle les épaississements (10) sont sollicités radialement vers l'intérieur, en direction d'un pivotement des doigts de maintien (7), par le flanc axialement voisin (13), en direction de l'extrémité du tuyau souple, de l'ondulation (14) associée du tuyau souple.

9. Assemblage emboîté selon une ou plusieurs des revendications 6 à 8, **caractérisé en ce que** la bague porteuse (5) dépasse de l'extrémité (4) du tuyau souple vers l'extérieur et y présente terminalement un collet (21) s'étendant radialement vers l'extérieur et toujours axialement distant de l'extrémité du tuyau souple.

10. Assemblage emboîté selon une ou plusieurs des revendications 1 à 5, **caractérisé en ce que** l'élément de maintien est formé par une bague élastique (50) insérée dans une ondulation (53) de l'extrémité (4) du tuyau souple, **en ce que** la bague élastique (50) présente, à partir d'un corps annulaire (51), des languettes élastiques (52) uniformément réparties sur la circonférence et s'étendant en oblique radialement vers l'intérieur depuis l'extrémité (4) du tuyau souple en direction du tuyau souple (1), **en ce que** la section circonscrite par les extrémités libres des languettes élastiques (52) est inférieure à la section extérieure de l'extrémité du tube lisse, et **en ce que** le diamètre extérieur de la bague élastique (50) ou encore de son corps annulaire (51) est inférieur au diamètre extérieur de l'ondulation associée (53) du tuyau souple, mais supérieur à la section intérieure libre du tuyau souple (4).

11. Assemblage emboîté selon la revendication 10, **caractérisé en ce que** la bague élastique (50) présente un joint de séparation (54) s'étendant sur toute sa section radiale.

12. Assemblage emboîté selon la revendication 10 ou 11, **caractérisé en ce que** la bague élastique (50) est réalisée en tôle d'acier à ressorts.

13. Assemblage emboîté selon une ou plusieurs des revendications 10 à 12, **caractérisé en ce qu'**une douille de déverrouillage (55), ayant un diamètre intérieur (59) correspondant au diamètre extérieur du tube lisse, est insérée dans l'extrémité (4) du tuyau souple en avant, en direction de l'ouverture de l'extrémité (4) du tuyau souple, de la bague élastique (50), **en ce que** la douille de déverrouillage (55) dépasse de l'extrémité (4) du tuyau souple axialement vers l'extérieur par une première (56) de ses extrémités, et **en ce que**, par l'autre extrémité (57) de la douille de déverrouillage (55), lors du coulissement axial correspondant de cette dernière, les languettes élastiques (52) peuvent pivoter radialement vers l'extérieur.

14. Assemblage emboîté selon la revendication 13, **caractérisé en ce que** la première extrémité (56) de la douille de déverrouillage (55) présente un collet (58) s'étendant radialement vers l'extérieur et axialement distant de l'extrémité du tuyau souple.

15. Assemblage emboîté selon la revendication 13 ou 14, **caractérisé en ce que** la première extrémité (56) de la douille de déverrouillage (55) est réalisée sous la forme d'une bague fermée sur la circonférence et ayant un diamètre intérieur (59) correspondant au diamètre extérieur de l'extrémité du tube lisse, **en ce que** la longueur restante de la douille de déverrouillage (55) présente des fentes longitudinales (60) parallèles à l'axe, disposées en étant uniformément réparties sur la circonférence et ouvertes vers l'autre extrémité (57) de la douille de déverrouillage (55), **en ce que** la longueur restante de la douille de déverrouillage (55) présente un bourrelet (61) extérieurement entourant, interrompu et dépassant dans une ondulation associée du tuyau souple, bourrelet dont la section dans la direction de l'axe (6) du tuyau souple est inférieure à la section correspondante de l'ondulation du tuyau souple, et **en ce que** le bourrelet (61) de la douille de déverrouillage (55) possède une position axiale qui permet le coulissement axial de la douille de déverrouillage (55) en vue du pivotement des languettes élastiques (52).

16. Assemblage emboîté selon une ou plusieurs des revendications 1 à 15, **caractérisé en ce que** la douille de guidage (18) présente, à son extrémité plus éloignée de l'extrémité du tuyau souple, un rétrécissement (20) de la section intérieure comme butée axiale pour l'extrémité du tube lisse et, à son autre extrémité, un collet (19) dépassant radialement vers l'extérieur pour l'engagement positif dans une ondulation associée (14) du tuyau souple.

17. Assemblage emboîté selon une ou plusieurs des revendications 1 à 16, **caractérisé en ce qu'**une douille de soutien (22) cylindrique creuse est montée extérieurement sur le tuyau souple (4), douille qui recouvre axialement la partie allant de l'extrémité du tuyau souple jusqu'à et y compris la région occupée par la douille de guidage (18, 25), le diamètre intérieur de la douille de soutien (22) correspondant au diamètre extérieur du tuyau souple (4) et la douille de soutien (22) étant empêchée de coulisser axialement par des coudages terminaux (23, 24) s'engageant derrière des ondulations (14) du tuyau souple.

18. Assemblage emboîté selon la revendication 1 ou 2, **caractérisé en ce que** la douille de guidage (25) présente un prolongement (26) essentiellement cylindrique creux, s'étendant jusqu'à l'extrémité du tuyau souple, **en ce qu'**un engagement positif est obtenu entre l'élément ainsi formé et le tuyau souple (4), engagement qui empêche au moins le coulissement axial en direction de l'extrémité du tuyau souple, **en ce que** l'élément porte, sur son enveloppe extérieure, au moins une bague d'étanchéité (46) se trouvant en engagement d'étanchement avec une ondulation associée (14) du tuyau souple, **en ce que** le prolongement (26) présente au moins une chambre annulaire intérieure (28, 29) destinée à recevoir la bague d'étanchéité (30) pour le tube lisse (31), et **en ce que** l'élément de maintien (34) est monté dans le prolongement (26), à son extrémité opposée à la douille de guidage (25).

19. Assemblage emboîté selon la revendication 18, **caractérisé en ce que** le prolongement (26) est d'une section extérieure plus grande que la douille de guidage (25), et est monté dans une extrémité du tuyau souple dont la section est élargie en conséquence.

20. Assemblage emboîté selon la revendication 18 ou 19, **caractérisé en ce que** l'engagement positif entre l'élément (25, 26) et le tuyau souple (4) est obtenu par des ergots de crantage (32), qui sont disposés sur le prolongement (26) en étant uniformément répartis sur au moins une circonférence et qui dépassent radialement vers l'extérieur dans une ondulation associée (27) du tuyau souple, et **en ce que** les ergots de crantage (32) présentent, sur leur côté opposé à l'extrémité du tuyau souple, une face biaise (33) qui forme un angle plat avec la direction de l'axe (6) du tuyau souple.

21. Assemblage emboîté selon une des revendications 18 à 20, **caractérisé en ce que** l'élément de maintien (34) présente, - à partir d'une bague porteuse (39) terminale, positionnée pour l'essentiel dans la région de l'extrémité libre du prolongement (26), fermée sur la circonférence et dont le diamètre intérieur correspond éventuellement au diamètre extérieur de l'extrémité du tube lisse - des doigts de maintien (38) s'étendant dans le prolongement (26) parallèlement à l'axe (6) du tuyau souple, disposés uniformément sur la circonférence, à mobilité élastique limitée en direction radiale et présentant une distance mutuelle en direction circonférentielle, et **en ce que** les doigts de maintien (38) présentent, à leurs extrémités libres, des coudages (43) dirigés radialement vers l'intérieur et destinés à bloquer le tube lisse (31) par friction, les coudages (43), à cet effet, à l'état relâché des doigts de maintien (38), s'étendant terminalement radialement vers l'intérieur dans la région de la section extérieure du tube lisse (31).

22. Assemblage emboîté selon la revendication 21, **caractérisé en ce qu'**une arête angulaire est configurée terminalement sur les coudages, pour l'application au moins par friction sur le tube lisse (31).

23. Assemblage emboîté selon la revendication 21 ou 22, **caractérisé en ce que** les extrémités libres des doigts de maintien (38) présentent un épaississement (37) dirigé radialement vers l'extérieur et dépassant dans un élargissement radial (36) de la section intérieure libre du prolongement (26), **en ce que** la section extérieure de chaque épaississement (37) est reliée à la face extérieure du doigt de maintien associé (38) par l'intermédiaire d'une face biaise (41) s'étendant en direction de la bague porteuse (39) et formant un angle plat avec la direction axiale (6) du tuyau souple (4), et **en ce que** l'élargissement (36) présente un biais (42) correspondant avec les faces biaises (41).

24. Assemblage emboîté selon une des revendications 21 à 23, **caractérisé en ce que** la bague porteuse (39) dépasse de l'extrémité libre du prolongement (26) vers l'extérieur et y présente terminalement un collet (44) s'étendant radialement vers l'extérieur et toujours axialement distant de l'extrémité du prolongement (26).

25. Assemblage emboîté selon une ou plusieurs des revendications 21 à 24, **caractérisé en ce que** la douille de guidage (25) présente, à son extrémité plus éloignée de l'extrémité libre du tuyau souple (4) ou encore du prolongement (26), un rétrécissement (45) de la section intérieure comme butée axiale pour l'extrémité du tube lisse (31).
